# EUROPÄISCHE PATENTSCHRIFT

(11) **EP 0 685 411 B1**
(45) Veröffentlichungstag und Bekanntmachung des Hinweises auf die Patenterteilung: **11.11.1998**
(21) Anmeldenummer: 95107819.5
(22) Anmeldetag: 23.05.1995
(51) Int. Cl.: B65F 3/04, G01G 19/08

(54) **Vorrichtung zum Entleeren von Grossbehältern**
Apparatus for emptying large réceptacles
Dispositif pour vider des grands récipients

(30) Priorität: 02.06.1994 DE 4419328
(43) Veröffentlichungstag der Anmeldung: 06.12.1995
(73) Patentinhaber: Zöller-Kipper GmbH, 55130 Mainz (DE)
(72) Erfinder: Pieperhoff, H.J., Dr.-Ing., D-55130 Mainz (DE); Naab, Jakob, D-55130 Mainz (DE)
(74) Vertreter: Fuchs Mehler Weiss & Fritzsche

(56) Entgegenhaltungen:
- EP-A- 0 521 847
- DE-C- 4 231 211
- GB-A- 2 109 335

## Beschreibung

Die Erfindung betrifft eine Vorrichtung zum Entleeren von Großbehältern in einen Sammelbehälter mit einer ersten, Druckmittelmotore aufweisenden Entleereinrichtung, an der erste Schwenkarme mit einer ersten Aufnahmeeinrichtung für Großbehälter erster Art sowie eine Wiegeeinrichtung zur Erfassung des Füllgewichtes des Behälters angeordnet sind.

Gewerbemüll wird in der Regel in Großraumbehältern gesammelt, die in Spezialfahrzeuge entleert werden. Am Heck dieser Fahrzeuge sind um eine horizontale, quer zur Fahrzeuglängsrichtung liegende Achse drehbar angelenkte Schwenkarme angeordnet, die jeweils mittels eines Hydraulikzylinders bewegt werden, der am Fahrzeug und am freien Ende des Schwenkarmes angelenkt ist. Die Großbehälter werden an den Schwenkarmen mittels Behälteraufnahmeeinrichtungen erfaßt, zu denen Aufnahmehaken zum Ergreifen der an der Behälteraußenwand angebrachten Tragzapfen zählen. Damit ist es möglich, Großbehälter mit einem Fassungsvolumen von 2 bis 5 m³ zu entleeren. In der Regel sind an den Schwenkarmen zusätzlich noch Haken zum Einhängen von Ketten oder dergleichen vorgesehen, so daß auch Behälter anderer Aufnahmen und Abmessungen entleert werden können. Da hierzu jedoch Umrüstmaßnahmen (z.B. das Einhängen von Ketten) erforderlich sind, ist das Entleeren anderer oder kleinerer Behälter mit zusätzlichem Aufwand verbunden.

Ebenso wie beim Hausmüll gehen auch beim Gewerbemüll die Bestrebungen dahin, die Gebühren für die Müllabfuhr am Gewicht zu orientieren, um hier einen gewissen Anreiz zur Müllvermeidung zu schaffen.

Es besteht außerdem das Bedürfnis, zusätzlich zu den 2 - 5 m³-Großbehältern auch Großbehälter zu entleeren und zu wiegen, die lediglich ein Fassungsvolumen von 0,5 bis 1,1 m³ aufweisen. Eine Entleerung und Wägung dieser Behälter ist mit den bekannten Vorrichtungen zum Entleeren von Großbehältern nicht möglich.

Aus der EP 02 55 624 B1 ist eine Wiegeeinrichtung bekannt, bei der die Kraftaufnehmer an einem solchen Element der Einschüttvorrichtung angeordnet sind, das direkt oder über ein Zwischenglied mit dem festen Träger verbunden ist. Mit dieser Vorrichtung können zwar unterschiedlich große Behälter gewogen und entleert werden, allerdings ist diese Vorrichtung mit einer Kammaufnahme versehen und für Hausmüll konzipiert worden, so daß eine Übertragung dieser konstruktiven Konzeption auf Gewerbemüllentleerungen nicht möglich ist.

Aus der EP 0 521 847 A2 ist ein Müllmengenwäge- und Volumenerfassungssystem bekannt, das an Müllfahrzeugen verwendet wird. Die Entleervorrichtung ist derart ausgebildet, daß unterschiedlich große Behälter entleert werden können, wozu eine Kammaufnahine zum Erfassen des Behälterrandes oder Tragarme zum Erfassen von seitlich am Behälter angebrachten Zapfen vorgesehen sind. Die Wägeeinrichtung sieht mindestens zwei Wägezellen vor, die in Belastungsrichtung hintereinander oder parallel angeordnet sind. Mit dieser bekannten Vorrichtung können Klein- und Großbehälter, nicht jedoch unterschiedlich ausgestaltete Großbehälter gewogen und entleert werden, wie sie für Gewerbemüll eingesetzt werden.

Von Gabelstaplern ist aus der DE-OS 25 57 597 eine Wiegeeinrichtung bekannt, die mit vier an den Lastarmen angeordneten Kraftaufnehmern arbeitet, die mit Wälzlagerrollen bestückt sind, auf den die Last aufnehmenden Schutzkästen aufliegen. Damit soll ein reibungsfreies Messen der Last ermöglicht werden. Die bewegliche Anordnung von die die Last tragenden Schutzkästen ist für den Einsatz an Schwenkarmen ungeeignet, weil dadurch eine instabile Anordnung geschaffen wird, die keine exakte Gewichtsbestimmung zuläßt.

Aus der US-PS 4,714,122 ist gemäß einer Ausführung ein Überkopflader bekannt, bei dem die Lastarme mit Kraftaufnehmern bestückt sind. Auf den Kraftaufnehmern liegt eine Platte zur Aufnahme des Behälters auf, die federnd gelagert und gegen Verrutschen gesichert ist. Die durch die Lagerung der Platte bedingten Reibungs- und Federkräfte führen zu einem Meßfehler, der bei der Auswertung der Gewichtsdaten berücksichtigt werden muß. Gemäß einer anderen Ausführung werden Großbehälter mittels eines Seils zum Entleeren hochgezogen und in einer vorgegebenen Position über eine am Seil angreifende Wägezelle gewogen. Spezielle Aufnahmevorrichtungen, beispielsweise zur Erfassung von Müllbehältern, die an den Seitenwänden Zapfen aufweisen, sind hier nicht vorgesehen.

Aus der DE 42 31 211 C1 ist eine Vorrichtung zum Entleeren von Großraumbehältern bekannt, bei der die Schwenkarme zweiteilig aufgebaut sind. Zwischen den Schwenkarmteilen befinden sich Meßaufnehmer, die derart ausgerichtet sind, daß die Meßrichtung der Meßelemente bei einem vorgegebenen Schwenkwinkel der Schwenkarme mit der Vertikalen zusammenfällt. Diese Vorrichtung, die ein Entleeren und Wiegen von Großbehältern ermöglicht, besitzt jedoch keine Möglichkeiten, auch kleinere Großbehälter mit einem Fassungsvermögen von 0,5 bis 1,1 m³ zu entleeren und zu wiegen.

Aufgabe der vorliegenden Erfindung ist daher eine Vorrichtung zum Entleeren von Großbehältern, mit der, Großbehälter unterschiedlichen Fassungsvermögens gewogen und entleert werden können, wobei bei einem Wechsel von einem Großbehälter zum anderen Großbehälter keine oder nur geringe Umrüstarbeiten erforderlich sein sollen.

Diese Aufgabe wird mit einer Vorrichtung gemäß den Merkmalen des Patentanspruchs 1 gelöst. Vorteilhafte Ausgestaltungen sind Gegenstand der Unteransprüche.

Die Erfindung beruht auf der Erkenntnis, daß zwei unterschiedliche Entleereinrichtungen für die jeweiligen Großbehälter mit nur einer Wiegeeinrichtung zusammenwirken können.

Zum Entleeren von Großbehältern zweiter Art, z.B. Großbehälter mit einem Fassungsvolumen von 1,1 m³, ist daher an den ersten Schwenkarmen eine zweite Schwenkeinrichtung befestigt, an der zweite Schwenkarme mit einer zweiten Aufnahmeeinrichtung für diese Großbehälter angeordnet sind. Da jeder Behältergröße eine eigene Schwenkeinrichtung zugeordnet ist, sind keine Umrüstmaßnahmen erforderlich. Hierzu trägt auch die Maßnahme bei, daß beide Aufnahmeeinrichtungen derart angeordnet sind, daß sich in Wägeposition die jeweiligen Behälterschwerpunkte im Wirkbereich der Wiegeeinrichtung befinden. Da unterschiedlich ausgestattete Wiegeeinrichtungen zusammen mit den beiden Entleereinrichtungen verwendet werden können, wird unter dem Wirkbereich ein räumlicher Bereich im Arbeitsbereich der Entleereinrichtungen verstanden, in dem die Wiegeeinrichtung ohne Eingabe von Korrekturdaten zuverlässig arbeitet. Dies ist im Idealfall dann erreicht, wenn die Anordnung der beiden Aufnahmeeinrichtungen so gewählt ist, daß die Schwerpunkte der Behälter erster und zweiter Art zusammenfallen.

Vorzugsweise werden erste Schwenkarme eingesetzt, die ein erstes am Sammelbehälter angelenktes Armteil und ein zweites, die erste Aufnahmeeinrichtung tragendes Armteil aufweist, wobei das zweite Armteil das erste Armteil zumindest teilweise in sich aufnimmt und im zweiten Armteil mindestens zwei Meßaufnehmer angeordnet sind, an denen jeweils beide Armteile befestigt sind.

Der Wirkbereich der Wiegeeinrichtung befindet sich bei dieser Ausführungsform zwischen den Meßaufnehmern, so daß nur vertikale Druckkräfte auf die Meßaufnehmer ausgeübt werden. Hierbei ist es wichtig, daß der Behälterschwerpunkt nicht außerhalb dieses Wirkbereiches liegt - die Wirkungslinie der eingeleiteten und zu messenden Gewichtskraft also nicht überkragt - da ansonsten eine Richtungsumkehr der Vertikallast auf einen der Meßaufnehmer erfolgen würde. Dies hätte den Nachteil, daß Behälterschwerpunkte außerhalb dieses Wirkbereiches zu einer größeren Hysterese und zu einer stark ungleichförmigen Lastverteilung auf den Meßaufnehmern führen würde.

Die zweite Schwenkeinrichtung ist vorzugsweise an dem, dem Sammelbehälter zugewandten Ende der ersten Schwenkarme angeordnet. Hierbei ist die zweite Schwenkeinrichtung am selben Bauteil befestigt, an dem die erste Aufnahmeeinrichtung angeordnet ist. Die Nähe zum Sammelbehälter hat den Vorteil, daß nur kurze Zuleitungen für die Druckmittelmotore der zweiten Schwenkeinrichtung erforderlich sind, die dadurch nur in vernachlässigbarer Weise zum zu messenden Gesamtgewicht beitragen.

Die zweite Schwenkeinrichtung weist vorzugsweise an jedem ersten Schwenkarm einen Druckmittelmotor mit einer Zahnstange auf, die an einem mit dem zweiten Schwenkarm verbundenen Zahnrad, ggf. über eine nach innen sich erstreckende Schwenkwelle, verbunden ist.

Gemäß einer weiteren Ausführungsform kann die zweite Schwenkeinrichtung beidseitig einen Druckmittelmotor aufweisen, der am jeweiligen ersten Schwenkarm angelenkt ist und gegebenenfalls über einen Hebel an einem Armteil der zweiten Schwenkarme angreift.

Damit sich in Wägeposition die zweite Aufnahmeeinrichtung im Wirkbereich der Wiegeeinrichtung befindet, müssen die Schwenkarme vorzugsweise bestimmte Länge aufweisen. Damit die zweiten Schwenkarme das Entleeren von Großbehältern erster Art jedoch nicht behindern, sind die zweiten Schwenkarme vorzugsweise um eine vertikale Achse von einer Ruhe - in eine Arbeitsstellung und umgekehrt bewegbar. Vorteilhafterweise bestehen die zweiten Schwenkarme aus zwei gelenkig miteinander verbundenen Schwenkarmteilen.

Die Schwenkarmteile können von Hand bewegt werden, was geringe Umrüstarbeiten erforderlich macht, oder es können an den Schwenkarmteilen entsprechende Antriebsseinrichtungen vorgesehen sein, die dann, wenn Großbehälter zweiter Art entleert werden sollen, die zweiten Schwenkarme beispielsweise durch Knopfdruck in die Arbeitsposition fahren.

Vorzugsweise sind beide Schwenkeinrichtungen an eine gemeinsame Steuereinrichtung angeschlossen, die gemäß einer vorteilhaften Ausführungsform in Abhängigkeit von der Stellung der zweiten Schwenkarme die Schwenkeinrichtungen ansteuert. Zur Lageerkennung der zweiten Schwenkarme sind vorzugsweise Positionsmelder vorgesehen, die an die Steuereinrichtung angeschlossen sind. Die Positionsmelder können aus Näherungsschaltern bestehen.

Wenn Großbehälter erster Art entleert werden sollen, so werden diese mittels der ersten Entleereinrichtung aufgenommen und in den Sammelbehälter entleert. Die erste Schwenkeinrichtung ist daher unabhängig von der zweiten Schwenkeinrichtung betätigbar. Dies setzt allerdings voraus, daß sich die zweiten Schwenkarme in Ruhestellung befinden. Vorzugsweise sind die Antriebseinrichtungen zum Bewegen der zweiten Schwenkarme in Ruhe - bzw. Arbeitsstellung ebenfalls an die Steuereinrichtung angeschlossen, so daß diese - falls die Schwenkarme sich noch in Arbeitsstellung befinden sollten - automatisch beigeschwenkt werden. Genauso können die zweiten Schwenkarme über die Steuereinrichtung in Arbeitsposition geschwenkt werden, wenn Großbehälter zweiter Art entleert werden sollen. In diesem Fall steuert die Steuereinrichtung die Antriebsmotore der ersten Schwenkarme derart an, daß sie in Wägeposition fahren, falls sie sich noch nicht in dieser Position befinden sollten, die auch gleichzeitig der Fahrposition entspricht, und danach wird die zweite Entleereinrichtung aktiviert, die zunächst zur Durchführung der Wiegung den Behälter vom Boden abhebt und anschließend den Behälter in den Sammelbehälter entleert.

Die Ansteuerung der jeweils zu benutzenden Entleereinrichtung kann auch über eine Behältercodierung erfolgen. D.h. der Behälter trägt einen Identifikationschip, der von einem Lesekopf an der Entleereinrichtung identifiziert wird. Ein Signal an die Steuerung gibt den Auftrag, die richtige Entleereinrichtung zu aktivieren.

Wenn sich die Schwenkarme in Ruheposition befinden und Großbehälter erster Art entleert werden sollen, wird von der Steuereinrichtung lediglich die erste Schwenkeinrichtung betätigt. Die ersten Schwenkarme werden in Wägeposition geschwenkt, die Wägung durchgeführt und anschließend erfolgt die Entleerung des Großbehälters erster Art.

Nach dem Entleeren wird beim Erreichen der Wägeposition jeweils eine zweite Wägung, nämlich die Wägung des leeren Großbehälters vorgenommen, bevor der Großbehälter abgesetzt wird.

Anstelle zweier statischer Messungen vor und nach dem Entleeren können auch dynamische Messungen durchgeführt werden. Hierbei werden die Messungen immer dann durchgeführt, wenn die ersten Schwenkarme einen vorgegebenen Schwenkwinkelbereich αₛ ± Δ α durchlaufen. Beim Entleeren der Behälter zweiter Art erfolgt die Wiegung immer dann, wenn der Behälter vom Boden abgehoben ist und sich im Wirkbereich der Wiegeeinrichtung befindet, wobei die ersten Schwenkarme im Schwerkwinkelbereich αₛ ± Δ α positioniert sind.

Beispielhafte Ausführungsformen der Erfindung werden nachfolgend anhand der Zeichnungen näher erläutert.

Es zeigen:
- Fig. 1: ein Müllsammelfahrzeug mit aufgenommenem Großbehälter erster Art in Seitenansicht
- Fig. 2: eine Draufsicht auf die erste Entleereinrichtung
- Fig. 3,4,5: vergrößerte Seitenansicht der Entleereinrichtungen in Aufnahmeposition, Wägeposition und Entleerposition
- Fig. 6: einen Schnitt längs der Linie VI-VI in Fig. 3
- Fig. 7: einen Schnitt durch die Antriebseinrichtung der zweiten Entleereinrichtung, und
- Fig. 8: die Antriebseinrichtung der zweiten Entleereinrichtung gemäß einer weiteren Ausführungsform.

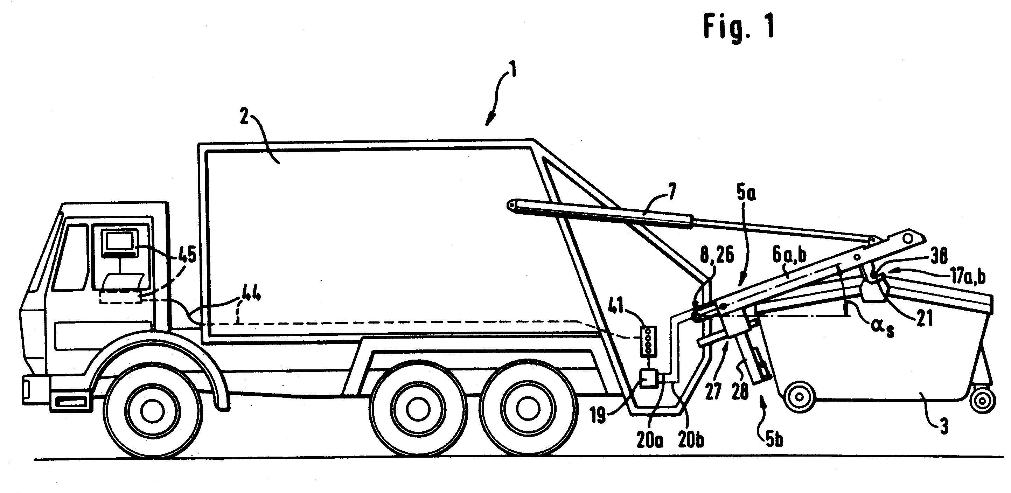

In der Figur 1 ist ein Müllfahrzeug 1 mit einem Sammelbehälter 2 dargestellt, an dessen Heck zwei Entleereinrichtungen 5a und 5b angebracht sind. Die beiden Entleereinrichtungen 5a, 5b sind zum Entleeren von Großbehältern mit unterschiedlichem Füllgewicht ausgelegt.

Die erste Entleereinrichtung 5a dient zum Entleeren von Großbehältern 3 erster Art, von denen einer in der Figur 1 dargestellt ist. Hierbei handelt es sich um Großbehälter mit einem Fassungsvolumen von 2 bis 5 m³.

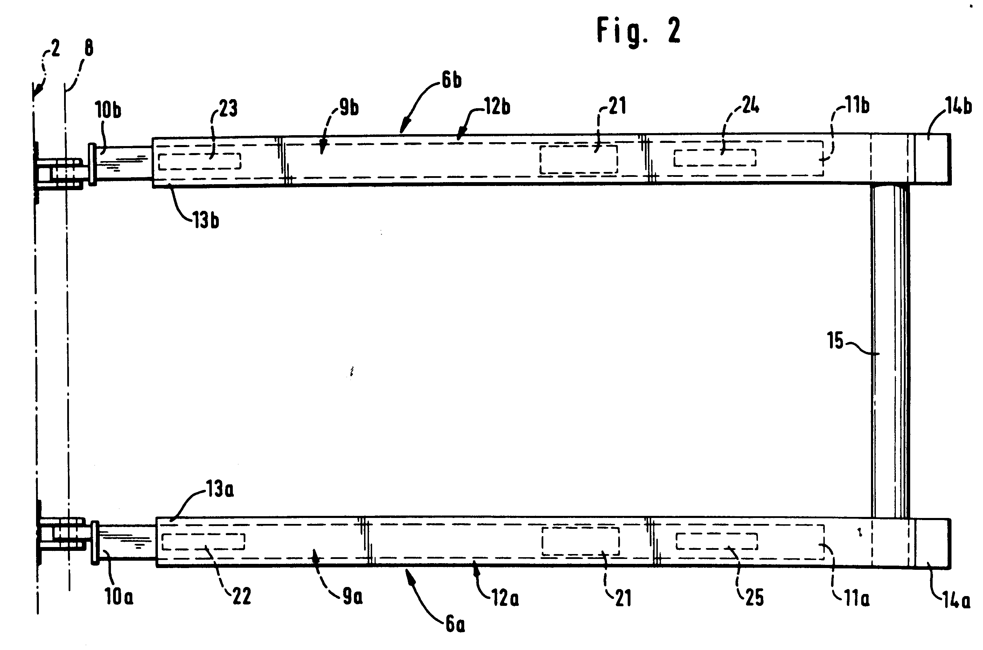

Die erste Entleereinrichtung 5a weist zwei erste Schwenkarme 6a, b auf, die um eine Schwenkachse 8 schwenkbar sind. Am freien Ende der ersten Schwenkarme 6a, b ist jeweils ein Hydraulikzylinder 7 angelenkt, dessen anderes Ende am Heck des Fahrzeuges 1 befestigt ist. Jeder Schwenkarm 6a, b besitzt eine erste Aufnahmeeinrichtung 17a, b, die an der Unterseite des jeweiligen Schwenkarmes 6a, b befestigt ist und in der hier gezeigten Ausführungsform aus einem Aufnahmehaken 21 besteht, mit dem die seitlich angeordneten Zapfen 38 des Großbehälters 3 erfaßt werden. In der hier gezeigten Darstellung ist der Großbehälter 3 so weit hochgehoben, daß die Wägeposition erreicht ist. In dieser Position wird die Wiegung vorgenommen und anschließend der Großbehälter 3 entleert. Beim Zurückschwenken in diese Position wird eine zweite Wägung des leeren Großbehälters 3 durchgeführt. Die Wägezellen sind, wie nachfolgend noch im Zusammenhang mit der Figur 2 eingehend erläutert wird, in den ersten Schwenkarm 6a, b integriert und über eine Datenleitung 44 mit einer Gewichtsauswerteeinrichtung 45 verbunden.

Anstelle zweier statischer Messungen vor und nach dem Entleeren können auch dynamische Messungen durchgeführt werden. Hierbei werden die Messungen immer dann ausgeführt, wenn die ersten Schwenkarme den vorgegebenen Schwenkwinkelbereich αₛ ± Δ α durchlaufen. Ein Anhalten der Entleereinrichtung zwecks Wägung der Großbehälter ist dann nicht erforderlich.

In der Figur 2 ist eine Draufsicht auf die Entleereinrichtung 5a schematisch dargestellt. Die ersten Schwenkarme 6a und 6b sind zweiteilig ausgebildet, wobei das erste Armteil 9a, 9b am Sammelbehälter 2 um die Achse 8 schwenkbar angeordnet ist. Die zweiten Armteile 12a, b sind Hohlprofile, die über die ersten Armteile 9a und 9b gesteckt sind. Über eine Verbindungsstrebe 15 sind die beiden zweiten Armteile 12a, b an ihrem zweiten Ende 14a, b miteinander verbunden. Die zweiten Armteile 12a, b erstrecken sich bis in den Bereich der angelenkten Enden 10a, b der ersten Armteile 9a, b.

Innerhalb der zweiten Armteile 12a, b sind je ersten Schwenkarm 6a, b zwei Meßaufnehmer 22, 25 und 23, 24 angeordnet, wobei der Abstand der Meßaufnehmer 22, 25 und 23, 24 möglichst groß gewählt ist. Dementsprechend befinden sich die Meßaufnehmer 22 bis 25 jeweils im Bereich der Enden 13a, 13b, 10a, 10b sowie 11a, b und 14a, b der Armteile 9a und b und 12a, b. Die vier Meßaufnehmer 22 bis 25 bilden ein Viereck, das den Wirkbereich der Wiegeeinrichtung definiert. Dies bedeutet, daß die ersten und die zweiten Aufnahmeeinrichtungen 17a, b bzw. 18a, b so angeordnet sein müssen, daß sich die Behälter mit ihren Schwerpunkten innerhalb dieses Wirkbereiches befinden.

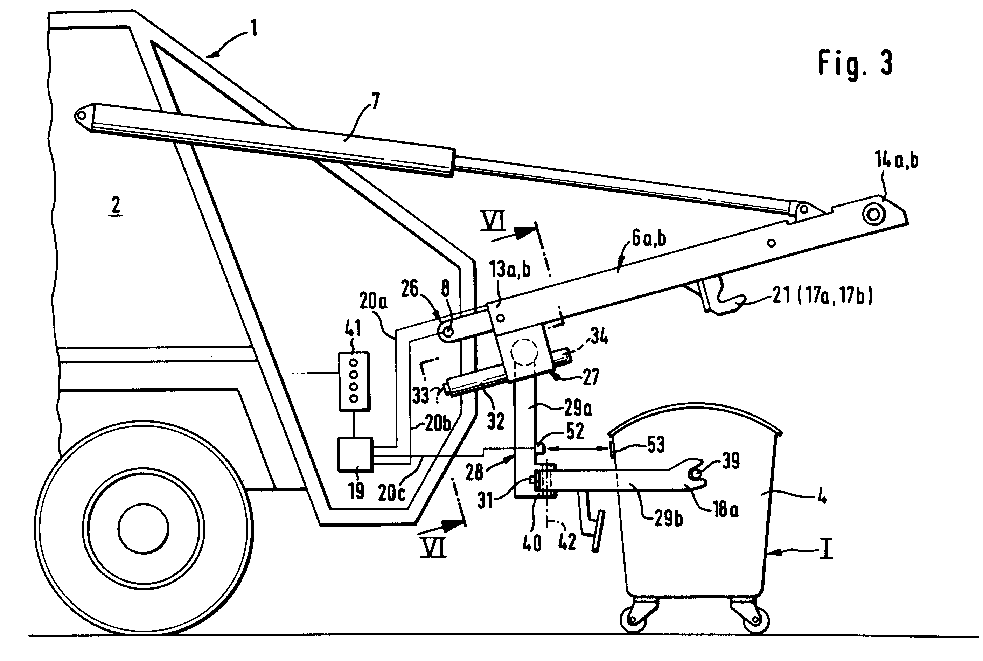

In der Figur 1 ist außer der als erste Schwenkeinrichtung 26 ausgebildeten Entleereinrichtung 5a an dem dem Sammelbehälter 2 zugewandten Ende der Schwenkarme 6a, b die zweite Entleereinrichtung 5b angeordnet, die ebenfalls als Schwerkeinrichtung 27 ausgebildet ist. Diese zweite Schwenkeinrichtung 27 ist an den Armteilen 12a, b der ersten Schwenkeinrichtung 26 befestigt, so daß die Meßaufnehmer 23 bis 25 auch das Gewicht der von der zweiten Schwenkeinrichtung 27 erfaßten Großbehälter 4 zweiter Art ermitteln können. Die zweite Schwenkeinrichtung 27 wird im Detail im Zusammenhang mit den Figuren 3 bis 7 erläutert. Die Antriebsmittel beider Schwenkeinrichtungen 26, 27 sind über die Verbindungsleitungen 20a, 20b mit einer gemeinsamen Steuereinrichtung 19 verbunden, die an einen Schalter 41 angeschlossen ist. Über die Drucktasten des Schalters 41 kann angewählt werden, ob ein Großbehälter erster Art oder ein Behälter zweiter Art entleert werden soll. Dementsprechend wird von der Steuereinrichtung 19 der Bewegungsablauf der ersten bzw. der zweiten Schwenkeinrichtung 26 bzw. 27 gesteuert.

Wenn Großbehälter 3 erster Art entleert werden sollen, wird ein entsprechender Taster am Schalter 41 betätigt und der Großbehälter 3 wird zunächst in Wägeposition gebracht, wie dies in der Figur 1 dargestellt ist. Nach Abschluß der Wägung wird durch weiteres Hochschwenken der ersten Schwenkeinrichtung 26 der Behälter entleert und in der Wägeposition unter dem Winkel αₛ die Zweitwägung des leeren Behälters vorgenommen. Anschließend wird durch Herunterschwenken der Schwenkarme 6a, b der Großbehälter 3 auf dem Erdboden abgesetzt.

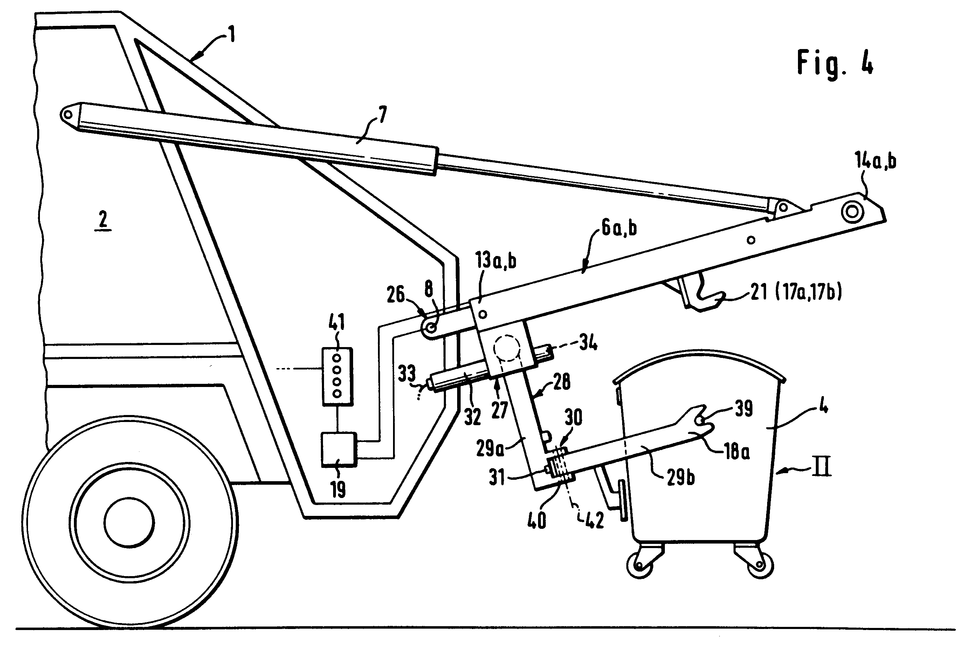

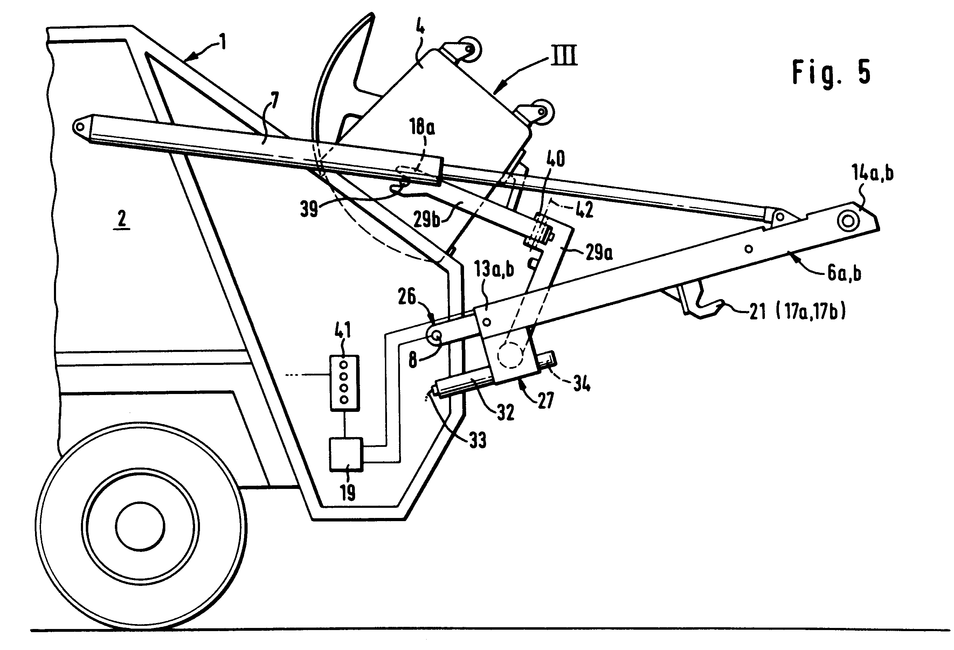

Wenn ein Großbehälter 4 zweiter Art entleert werden soll, so wird dies durch einen entsprechenden Tastendruck am Schalter 41 angewählt. In diesem Fall befinden sich die ersten Schwenkarme 6a, b bereits in Wägeposition, da diese auch der Fahrposition entspricht. Wie in den Figuren 3 bis 5 dargestellt ist, wird der Großbehälter 4 von den zweiten Schwenkarmen 28 an den Zapfen 39 erfaßt (Position I in Figur 3) und durch Hochschwenken der zweiten Schwenkarme 28 zunächst vom Boden abgehoben (Position II in Figur 4). Die erste Schwenkeinrichtung 26 verbleibt in ihrer Position und die Wägung wird durchgeführt. Die Entleerung wird dann durch Aktivierung der zweiten Schwenkeinrichtung 27 vorgenommen, wie dies in der Figur 5 (Position III) dargestellt ist. Nach der Entleerung des Großbehälters 4 in den Sammelbehälter 2 wird der Großbehälter zurückgeschwenkt, bis wiederum die Position II erreicht ist, in der die Zweitwägung des leeren Großbehälters 4 vorgenommen wird. Anschließend wird die zweite Schwenkeinrichtung 27 in die Ausgangsposition I zurückgeschwenkt und der Großbehälter 4 auf dem Erdboden abgesetzt.

Die Ansteuerung der jeweils zu benutzenden Entleervorrrichtung kann auch über eine Behältercodierung erfolgen, wie dies in Figur 3 am Beispiel eines Großbehälters 4 dargestellt ist, der an seiner dem Müllfahrzeug 2 zugewandten Behälterwand ein Identifikationselement 53 trägt. Mittels eines Lesekopfes 52, der beispielsweise am Armteil 29a angebracht sein kann, wird das Identifikationselement 53 gelesen und ein entsprechendes Signal über die Verbindungsleitung 20c an die Steuereinrichtung 19 gegeben, die dann die entsprechende Entleereinrichtung aktiviert.

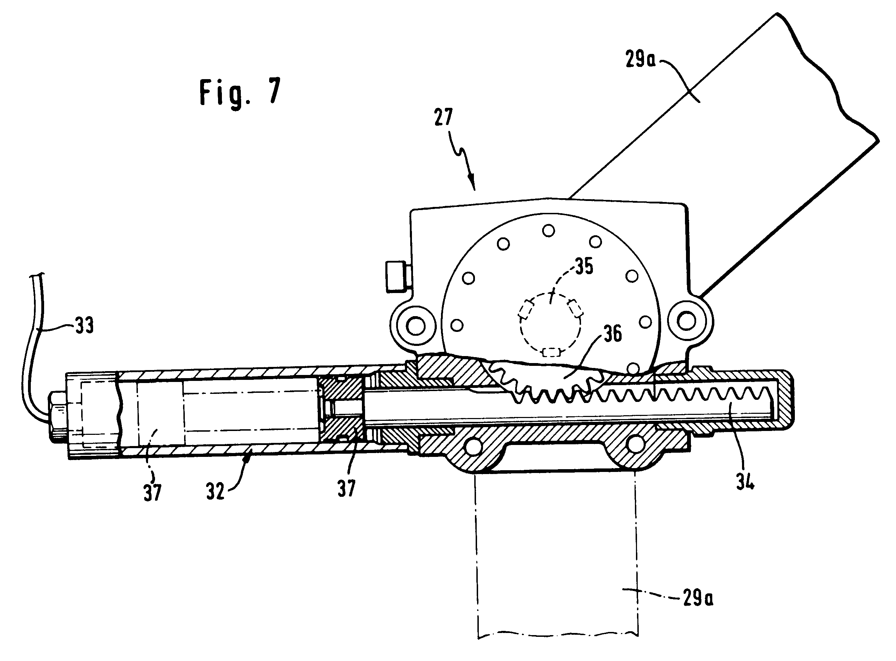

Wie in der Figur 3 dargestellt ist, besteht die zweite Schwenkeinrichtung 27 aus einen Druckmittelmotor 32 und einer Zahnstange 34, die im Zusammenhang mit der Figur 7 eingehender erläutert werden. An dieser Antriebseinrichtung, die über eine flexible Hydraulikleitung 33 mit einer nicht dargestellten Pumpe verbunden ist, sind auf beiden Seiten jeweils zweite Schwenkarme 28 befestigt. In der hier gezeigten Darstellung bestehen die Schwenkarme 28 aus einem vorderen Armteil 29a, das sich in der Position I senkrecht nach unten erstreckt, und einem horizontal angeordneten Armteil 29b, das an seinem freien Ende die zweite Aufnahmeeinrichtung 18a in Form von Aufnahmeklauen aufweist. Da die Großbehälter 4 zweiter Art in ihren Abmessungen kleiner sind als die Großbehälter 3 befindet sich die zweite Schwenkeinrichtung 27 mit ihren zweiten Schwenkarmen 28 zwischen den ersten Schwenkarmen 6a, b. Damit die Großbehälter 3 erster Art ungehindert aufgenommen werden können, ist es erforderlich, daß die zweiten Schwenkarme 28 in Ruhe- und Arbeitsstellung bewegt werden können. Zu diesem Zweck sind die Schwenkarmteile 29b in den Gelenken 30 um die vertikale Achse 42 schwenkbar angeordnet. Das Verschwenken erfolgt in der Regel manuell, kann aber auch, wie in der hier gezeigten Ausführungsform von Antriebseinrichtungen 40 bewegt werden. Diese Antriebseinrichtung 40 ist vorteilhafterweise ebenfalls mit der gemeinsamen Steuereinrichtung 19 verbunden, die beim Anwählen des jeweils zu entleerenden Behälters die Schwenkarmteile 29b in Ruhestellung bzw. in Arbeitsstellung verschwenkt. Im Bereich der Schwenkachse 42 sind zusätzlich noch Positionsmelder 31 angeordnet, die die Position der Schwenkarmteile 29b überwachen und nach Einnahme der jeweiligen Endposition ein entsprechendes Freigabesignal an die Steuereinrichtung 19 geben, die dann den entsprechenden Entleervorgang durch Betätigen der Schwenkeinrichtung 26 bzw. 27 einleitet.

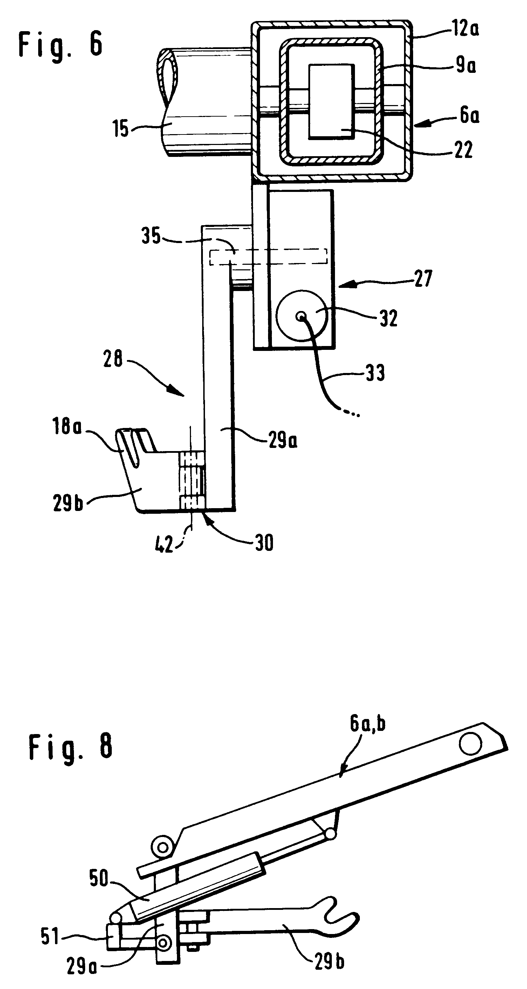

In der Figur 6 ist ein Schnitt durch die in der Figur 3 dargestellte zweite Schwenkeinrichtung 27 längs der Linie VI-VI dargestellt. Es ist der innere Aufbau des Schwenkarmes 6a zu sehen. Das Schwenkarmteil 12a, das als Rohr ausgebildet ist, umgibt das Schwenkarmteil 9a, an dem ein Meßaufnehmer 22 befestigt ist. An der Unterseite des Armteils 12a ist die zweite Schwenkeinrichtung 27 angeordnet, die eine sich nach innen erstreckende Schwenkwelle 35 aufweist, an der die zweiten Schwenkarme 28 befestigt sind.

In der Figur 7 ist eine vergrößerte Darstellung des Antriebes der zweiten Schwenkeinrichtung 27 vergrößert und teilweise im Schnitt dargestellt. Der Druckmittelmotor 32, der über eine flexible Hydraulikleitung 33 an eine nicht dargestellte Pumpe angeschlossen ist, besitzt einen Kolben 37, der mit einer Zahnstange 34 verbunden ist, die über ein Zahnrad 36 die Schwenkwelle 35 antreibt, an der die zweiten Schwenkarme 28 befestigt sind. Durch Betätigen des Druckmittelmotors 32 werden somit die zweiten Schwenkarme 28 verschwenkt und der an den Schwenkarmen 28 aufgenommene Großbehälter 4 kann somit entleert werden.

In der Figur 8 ist eine alternative Antriebseinrichtung für die zweite Schwerkeinrichtung 27 dargestellt, die zwei Druckmittelmotoren 50 aufweist, die jeweils an einem Ende am entsprechenden ersten Schwenkarm 6a, 6b angelenkt und am anderen Ende über einen Hebel 51 am Armteil 29a angreifen.

## Patentansprüche

1. Vorrichtung zum Entleeren von Großhehältern in einen Sammelbehälter mit einer ersten, Druckmittelmotore aufweisenden Entleereinrichtung, an der erste Schwenkarme mit einer ersten Aufnahmeeinrichtung für Großbehälter erster Art sowie eine Wiegeeinrichtung zur Erfassung des Füllgewichts des Behälters angeordnet sind, dadurch gekennzeichnet,
daß an den ersten Schwenkarmen (6a, b) eine zweite Entleereinrichtung (5b) mit eigenen Antriebsmotoren befestigt ist, an der zweite Schwenkarme (28) mit einer zweiten Aufnahmeeinrichtung (18a, b) für Großbehälter (4) zweiter Art angeordnet sind, und
daß beide Aufnahmeeinrichtungen (17a,b, 18a,b) in einem räumlichen Bereich der Entleereinrichtungen (5a, b) angeordnet sind, in dem sich in Wägeposition die jeweiligen Behälterschwerpunkte befinden und die Wiegeeinrichtung ohne Eingabe von Korrekturdaten zuverlässig arbeitet.

2. Vorrichtung nach Anspruch 1, dadurch gekennzeichnet, daß die erste Schwenkeinrichtung (26) unabhängig von der zweiten Schwenkeinrichtung (27) betätigbar ist.

3. Vorrichtung nach einem der Ansprüche 1 oder 2, dadurch gekennzeichnet,
daß beide Schwenkeinrichtungen (26, 27) an eine gemeinsame Steuereinrichtung (19) angeschlossen sind, die beim Entleeren von Großbehältern (4) zweiter Art die Druckmittelmotore (7) der ersten Schwenkarme (6a,b) derart ansteuert, daß sie in Wägeposition fahren,und daß dann erst die zweite Entleereinrichtung (5b) aktiviert wird.

4. Vorrichtung nach einem der Ansprüche 1-3, dadurch gekennzeichnet, daß die zweite Schwenkeinrichtung (27) an dem dem Sammelbehälter (2) zugewandten Ende (10a, b) der ersten Schwenkarme (6a, b) angeordnet ist.

5. Vorrichtung nach einem der Ansprüche 1 bis 4, dadurch gekennzeichnet, daß die zweite Schwenkeinrichtung (27) an jedem ersten Schwenkarm (6a, b) einen Druckmittelmotor (32) mit einer Zahnstange (34) umfaßt, die an einem mit dem zweiten Schwenkarm (28) verbundenen Zahnrad (36) angreift.

6. Vorrichtung nach einem der Ansprüche 1 bis 4, dadurch gekennzeichnet, daß die zweite Schwenkeinrichtung (27) an jedem ersten Schwenkarm (6a,b) einen Druckmittelmotor (50) aufweist, der über einen Hebel (51) am jeweiligen zweiten Schwenkarm (28) angreift.

7. Vorrichtung nach einem der Ansprüche 1 bis 6, dadurch gekennzeichnet, daß die zweiten Schwenkarme (28) um eine vertikale Achse von einer Ruhe - in eine Arbeitsstellung und umgekehrt bewegbar sind.

8. Vorrichtung nach Anspruch 7, dadurch gekennzeichnet, daß den zweiten Schwenkarmen (28) Antriebseinrichtungen (40) zum Bewegen in Ruhe- und Arbeitsstellung zugeordnet sind.

9. Vorrichtung nach Anspruch 8, dadurch gekennzeichnet, daß die Antriebseinrichtungen (40) an die gemeinsame Steuereinrichtung (19) angeschlossen sind.

10. Vorrichtung nach einem der Ansprüche 1 bis 9, dadurch gekennzeichnet, daß die Steuereinrichtung (19) in Abhängigkeit von der Position der zweiten Schwenkarme (28) die Schwenkeinrichtungen (26, 27) ansteuert.

11. Vorrichtung nach einem der Ansprüche 1 bis 10, dadurch gekennzeichnet, daß an den zweiten Schwenkarmen (28) Positionsmelder (31) angeordnet sind, die an die Steuereinrichtung (19) angeschlossen sind.

12. Vorrichtung nach Anspruch 11, dadurch gekennzeichnet, daß die Positionsmelder (31) Näherungsschalter sind.

13. Vorrichtung nach einem der Ansprüche 1 bis 12, dadurch gekennzeichnet, daß jeder erste Schwenkarm (6a, b) ein erstes, am Sammelbehälter (2) angelenktes Armteil (9a, b) und ein zweites, die Aufnahmeeinrichtung (17a, b) tragendes Armteil (12a, b) aufweist, wobei das zweite Armteil (12a, b) das erste Armteil (9a, b) zumindest teilweise in sich aufnimmt und im zweiten Armteil (12a, b) mindestens zwei Meßaufnehmer (22-25) angeordnet sind, an denen jeweils beide Armteile (9a, b, 12a, b) befestigt sind.

14. Vorrichtung nach Anspruch 13, dadurch gekennzeichnet, daß die beiden Aufnahmeeinrichtungen (17a,b, 18a,b) jeweils zwischen den Meßaufnehmern (23, 24 und 22, 25) jedes ersten Schwenkarms (6a,b) angeordnet sind.

## Claims

1. Apparatus for emptying large receptacles into a collecting container, the apparatus having a first emptying device which has fluid motors and on which first pivot arms, having a first pick-up device for large receptacles of a first type, and a weighing device for determining the weight of the contents of the receptacle are arranged, characterised in that
a second emptying device (5b) having its own drive motors is attached to the first pivot arms (6a, b) and second pivot arms (28) having a second pick-up device (18a, b) for large receptacles (4) of a second type are arranged thereon and in that
both pick-up devices (17a, b, 18a, b) are arranged in a spatial region of the emptying devices (5a, b) in which, in the weighing position the respective centres of gravity of the receptacles are located and the weighing device functions reliably without correction data being entered.

2. Apparatus according to claim 1, characterised in that the first pivot device (26) is actuatable independently of the second pivot device (27).

3. Apparatus according to either claim 1 or claim 2, characterised in that
both pivot devices (26, 27) are connected to a common control device (19) which, during the emptying of large receptacles (4) of the second type, controls the fluid motors (7) of the first pivot arms (6a, b) in such a manner that they move into the weighing position, and in that only then is the second emptying device (5b) activated.

4. Apparatus according to any one or claims 1 to 3, characterised in that the second pivot device (27) is arranged at the end (10a, b) of the first pivot arms (6a, b) that faces the collecting container (2).

5. Apparatus according to any one of claims 1 to 4, characterised in that the second pivot device (27) on each first pivot arm (6a, b) comprises a fluid motor (32) having a toothed rack (34) which acts upon a toothed wheel (36) connected to the second pivot arm (28).

6. Apparatus according to any one of claims 1 to 4, characterised in that the second pivot device (27) on each first pivot arm (6a, b) has a fluid motor (50) which acts upon the respective second pivot arm (28) via a lever (51).

7. Apparatus according to any one of claims l to 6, characterised in that the second pivot arms (28) are movable about an upright axis from a rest position into a work position, and vice versa.

8. Apparatus according to claim 7, characterised in that drive devices (40) for movement into the rest and work positions are associated with the second pivot arms (28).

9. Apparatus according to claim 8, characterised in that the drive devices (40) are connected to the common control device (19).

10. Apparatus according to any one of claims 1 to 9, characterised in that the control device (19) controls the pivot devices (26, 27) as a function of the position of the second pivot arms (28).

11. Apparatus according to any one of claims 1 to 10, characterised in that position indicators (31) are arranged on the second pivot arms (28) and are connected to the control device (19).

12. Apparatus according to claim 11, characterised in that the position indicators (31) are proximity switches.

13. Apparatus according to any one of claims 1 to 12, characterised in that each first pivot arm (6a, b) has a first arm portion (9a, b) articulated to the collecting container (2) and a second arm portion (12a, b) carrying the pick-up device (17a, b), the second arm portion (12a, b) at least partially accommodating the first arm portion (9a, b) and at least two measurement detectors (22 - 25) to which the two respective arm portions (9a, b, 12a, b) are attached being arranged in the second arm portion (12a, b).

14. Apparatus according to claim 13, characterised in that the two pick-up devices (17a, b, 18a, b) are each arranged between the measurement detectors (23, 24 and 22, 25) of each first pivot arm (6a, b).

## Revendications

1. Dispositif pour vider des grands récipients dans un récipient collecteur avec un premier dispositif de vidage comprenant des moteurs de poussée, sur lequel sont agencés des premiers bras pivotants avec un premier dispositif de saisie pour les grands récipients du premier type, ainsi qu'un dispositif de pesage pour calculer le poids de remplissage du récipient, caractérisé en ce qu'un deuxième dispositif de vidage (5b) muni de moteurs d'entraînement propres est fixé au premiers bras pivotants (6a, b), sur lequel sont fixés des deuxièmes bras pivotants (28) avec un deuxième dispositif de saisie (18a, b) pour les grands récipients (4) du deuxième type, et en ce que les deux dispositifs de saisie (17a, b, 18a, b) sont agencés dans un espace vide des dispositifs de vidage (5a, b) dans lequel se trouvent les centres de gravité respectifs des récipients en position de pesage, et en ce que le dispositif de pesage fonctionne de façon fiable sans qu'il soit nécessaire d'introduire des données correctives.

2. Dispositif suivant la revendication 1, caractérisé en ce que le premier dispositif de basculement (26) peut être actionné indépendamment du deuxième dispositif de basculement (27).

3. Dispositif suivant la revendication 1 ou 2, caractérisé en ce que les deux dispositifs de basculement (26, 27) sont reliés à un dispositif de commande commun (19) qui actionne les moteurs de poussée (7) des premiers bras pivotants (6a, b) lors du vidage de grands récipients (4) du deuxième type de telle sorte qu'ils atteignent la position de pesage et que le deuxième dispositif de vidage (5b) ne soit activé qu'à ce moment.

4. Dispositif suivant l'une quelconque des revendications 1 à 3, caractérisé en ce que le deuxième dispositif de basculement (27) est agencé à l'extrémité (10a, b) des premiers bras pivotants (6a, b) orientée vers le récipient collecteur (2).

5. Dispositif suivant l'une quelconque des revendications 1 à 4, caractérisé en ce que le deuxième dispositif de basculement (27) comprend à chaque premier bras pivotant (6a, b) un moteur de poussée (32) avec une crémaillère (34), qui agit sur une roue dentée (36) reliée au deuxième bras pivotant (28).

6. Dispositif suivant l'une quelconque des revendications 1 à 4, caractérisé en ce que le deuxième dispositif de basculement (27) comprend à chaque premier bras pivotant (6a, b) un moteur de poussée (50) qui agit sur le deuxième bras pivotant respectif (28) par le biais d'un levier (51).

7. Dispositif suivant l'une quelconque des revendications 1 à 6, caractérisé en ce que les deuxièmes bras pivotants (28) peuvent être déplacés d'une position de repos à une position de fonctionnement, et inversement, suivant un axe vertical.

8. Dispositif suivant la revendication 7, caractérisé en ce que les deuxièmes bras pivotants (28) sont munis de dispositifs d'entraînement (40) pour les déplacer en position de repos et de fonctionnement.

9. Dispositif suivant la revendication 8, caractérisé en ce que les dispositifs d'entraînement (40) sont reliés au dispositif de commande commun (19).

10. Dispositif suivant l'une quelconque des revendications 1 à 9, caractérisé en ce que le dispositif de commande (19) actionne les dispositifs de basculement (26, 27) en fonction de la position des deuxièmes bras pivotants (28).

11. Dispositif suivant l'une quelconque des revendications 1 à 10, caractérisé en ce que des indicateurs de position (31), qui sont connectés au dispositif de commande (19), sont placés sur les deuxièmes bras pivotants (28).

12. Dispositif suivant la revendication 11, caractérisé en ce que les indicateurs de position (31) sont des détecteurs de proximité.

13. Dispositif suivant l'une quelconque des revendications 1 à 12, caractérisé en ce que chaque premier bras pivotant (6a, b) comprend une première section de bras (9a, b) articulée au récipient collecteur (2) et une deuxième section de bras (12a, b) supportant le dispositif de saisie (17a, b), dans lequel la deuxième section de bras (12a, b) abrite au moins en partie la première section de bras (9a, b) et au moins deux capteurs de mesure (22-25) sont agencés dans la deuxième section de bras (12a, b), auxquels sont fixés à chaque fois les deux sections de bras (9a, b, 12a, b).

14. Dispositif suivant la revendication 13, caractérisé en ce que les deux dispositifs de saisie (17a, b, 18a, b) sont agencés à chaque fois entre les capteurs de mesure (23, 24 et 22, 25) de chaque premier bras pivotant (6a, b).
